# EUROPEAN PATENT APPLICATION

(11) **EP 1 407 962 A1**
(43) Date of publication of application: **14.04.2004**
(21) Application number: 02425621.6
(22) Date of filing: 11.10.2002
(51) Int. Cl.: B62M 9/10

(54) **Sprocket support member for a bicycle sprocket assembly**

(71) Applicant: Campagnolo Srl, 36100 Vicenza (VI) (IT)
(72) Inventor: Valle, Maurizio, 36100 Vicenza (IT)
(74) Representative: Castiglia, Paolo

(57) **Abstract**

A sprocket assembly for a bicycle rear wheel, comprising at least one subgroup (28, 29, 30) including a sprocket support member (31, 32, 33) presenting at least one engagement portion (34) provided with means (35) for coupling it to a bicycle freewheel and at least one fastening portion (37) arranged in a radially external position with respect to said engagement portion (34), and at least two sprockets (15 and 16, 17 and 18, 19 and 20) fixed to the same side of said fastening portion (37).

## Description

The present invention relates to a sprocket support member for a sprocket assembly of a bicycle rear wheel.

Over recent years, the number of transmission ratios available on bicycle gear change devices has progressively increased and sprocket assemblies for the rear wheel of a bicycle having 9 or 10 sprockets are increasingly common on the market. The progressive increase in the sprockets number requires ever increasing research for reducing the weight of the sprocket assembly. In document US5935034, of the same Applicant, a sprocket assembly is described that includes a support member presenting a radially internal portion shaped such that it couples with a freewheel device and a radially external fastener portion. Two sprockets are mounted on the opposite surfaces of said fastener portion. A third sprocket can be mounted on the support member in addition to the first two sprockets through a plurality of spacer bushes. The document US6102821 describes a sprocket assembly in which two sprockets are fixed on opposite sides of a sprocket support member by pins that engage with aligned holes of the sprockets and of the support member.

With the progressive increase in the number of sprockets, in addition to the need of reducing the weight of the assembly, there is also the need of arranging the sprockets in positions that are closer one to the other. In consequence, the space available for the sprocket support member becomes more reduced. On the other hand, this member performs an important structural function and it is necessary to ensure that it has high rigidity and resistance characteristics.

Object of the present invention is to provide a sprocket support member of a bicycle rear wheel which allows all of said requirements to be satisfied.

According to the present invention, this object is achieved by a sprocket support member presenting the characteristics specified in the claims.

Characteristics and advantages of the sprocket support member according to the present invention will become evident through the detailed description that follows, provided purely as a non-limiting example, in which:
- Figure 1 is a partially cross-sectional side view of part of a sprocket assembly according to the present invention,
- Figure 2 is a perspective rear view of the sprocket assembly in Figure 1,
- Figure 3 is a front elevation of a sprocket support member according to the present invention,
- Figure 4 is a cross-section along the line IV-IV in Figure 3,
- Figure 5 is a front elevation of a second embodiment of the sprocket support member according to the invention,
- Figure 6 is a cross-section along the arrow VI-VI in Figure 5,
- Figure 7 is a front elevation of a subgroup indicated by the arrow VII in Figure 1,
- Figure 8 is a cross-section along the line VIII-VIII in Figure 7, and
- Figure 9 is an enlarged-scale cross-section of the detail indicated by the arrow IX in Figure 8.

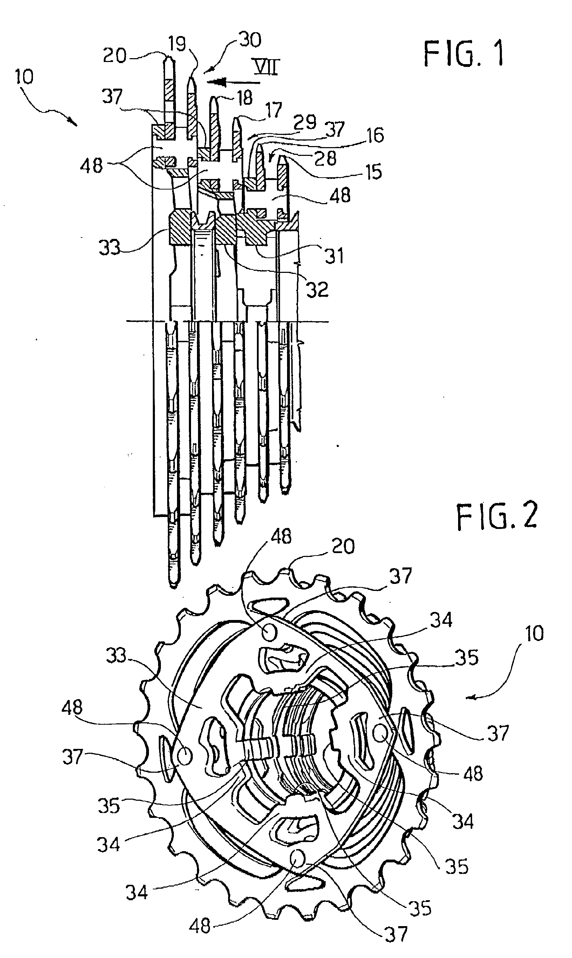

With reference to Figure 1, reference number 10 indicates part of a sprocket assembly of a bicycle rear wheel. The sprocket assembly illustrated in Figure 1 includes ten sprockets, although not all of them are shown. The sprocket assembly 10 is destined to be mounted on the hub of a freewheel device (not shown). The hub of the freewheel device is provided with an external splined surface, in a known manner.

In the embodiment illustrated in Figure 1, the sprocket assembly 10 comprises individual sprockets fitted with respective internal radial teeth that directly engage with the splined surface of the hub of the freewheel device, separated from each other in the axial direction by spacer rings.

The sprockets 15 and 16, 17 and 18, 19 and 20 are fixed together in pairs in the manner that will be described further on and they form three subgroups, indicated as 28, 29 and 30. These subgroups include the respective sprocket support members, indicated as 31, 32 and 33. Only subgroup 30, including the sprockets 19 and 20 and the sprocket support member 33, will be described in detail in the following part of the description. The two remaining subgroups 28 and 29 are conceptually identical to subgroup 30, even if there are differences with regards to the shape and size of the respective sprocket support members 31, 32.

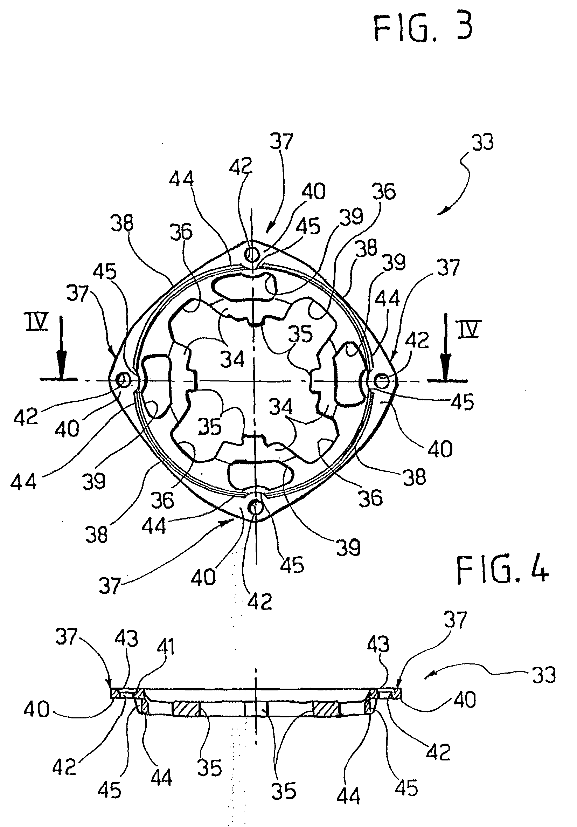

With reference to Figures 3 and 4, the sprocket support member 33 of subgroup 30 includes a plurality of engagement portions 34 each of which is constituted by an integral formation radially projecting towards the inside and provided with a respective tooth 35. The teeth 35 of the engagement portions 34 are shaped so as to engage the splined surface of the hub of the freewheel device. For example, the engagement portions 34 are angularly spaced out, at 90° from each other, and a weight-reducing hollow zone 36 opens into the central internal opening of the sprocket support member 33 foreseen between each pair of formations 34.

The sprocket support member 33 includes a plurality of fastening portions 37, arranged in radially external positions with respect to the engagement portions 34. In the embodiment illustrated in the figures, the fastening portions 37 are angularly spaced out at 90° from each other. Each fastening portion 37 is arranged in radial alignment with a respective engagement portion 34. From the structural point of view, the sprocket support member 33 results to be formed by a series of equidistant structural units, each of which includes an engagement portion 34 and a fastening portion 37, the individual structural units being connected to each other by zones 38 of smaller radial dimensions. Each of these structural units, in addition to the hollow zone 36, can be provided with an additional weight-saving cavity 39 located between the engagement portion 34 and the fastening portion 37.

The fastening portions 37 are axially displaced with respect to the engagement portions 34. More precisely, the fastening portions 37 are contained in a first plane orthogonal to the axis of the sprocket support member 33, and the engagement portions 34 are contained in a second plane parallel to the first. As will be better described further on in the description, the fastening portions 37 also perform the function of spacer members between two subgroups of adjacent sprockets. To perform this function, the fastening portions 37 have a thickness in the axial direction equal to the distance that it is wished to keep between two adjacent sprockets fixed to different sprocket support members.

The sprocket support member 33 can be obtained through hot or cold plastic deformation or through material removal machining and can be made of steel, aluminium and its alloys, titanium or any other metallic material with high resistance and lightness characteristics. The sprocket support member 33 can also be obtained through mould reticulation of a fabric made of structural fibres incorporated in a matrix of plastic material. The fibres can be chosen among a group including: carbon fibres, glass fibres, aramid fibres, boron fibres, ceramic fibres or any combination thereof.

Each fastening portion 37 presents a contact surface 40 and an outer surface 41. The surfaces 40 and 41 are preferably oriented in a radial direction and are mutually parallel. Each fastening portion 37 presents a mounting through hole 42. Preferably, each mounting hole 42 presents an enlarged portion 43 where it opens onto the outer surface 41.

Each fastening portion 37 presents an axial projection 44 located at the base of the contact surface 40. The axial projection 44 forms a kind of step between each fastening portion 37 and the respective engagement portion 34. In practice, the axial projection 44 is formed by an axial displacement of the fastening portions 37 with respect to the engagement portions 34. On the axial projections 44, in correspondence with each fastening portion 37, centring and support seats 45 are formed, each seat presenting the shape of a cylindrical sector coaxial with the respective fastening hole 42.

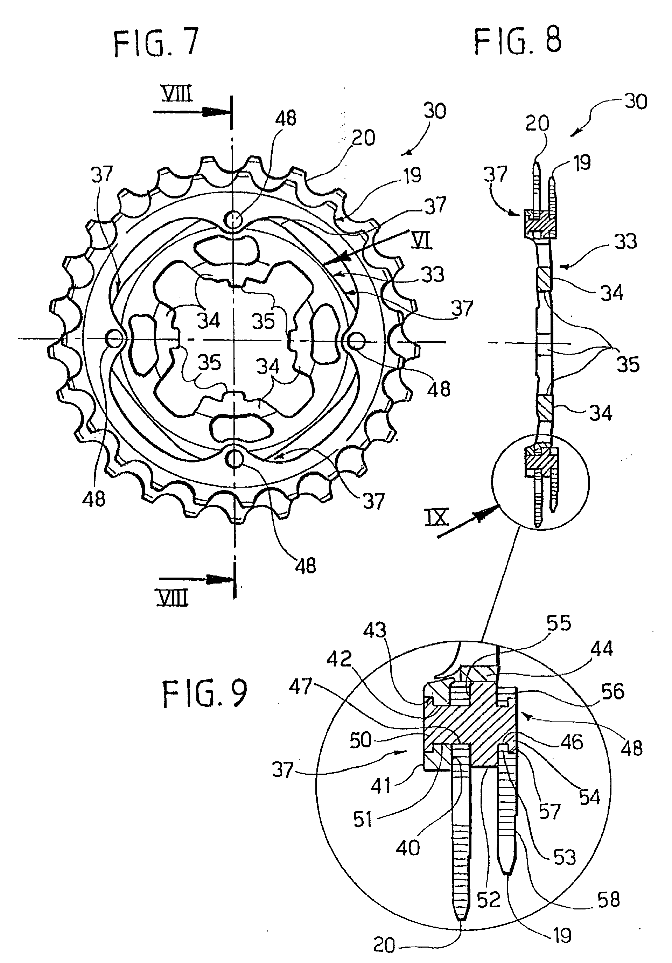

With reference to Figures 7 to 9, the two sprockets 19, 20 are fixed on the same side of the fastening portion 37. The sprockets 19, 20 are provided with respective holes 46 and 47, which are mutually coaxial and coaxial with the fastening holes 42 of the fastening portions 37. The fastening of the sprockets 19, 20 on the sprocket support member 33 is made by a plurality of fastening elements 48.

With reference to Figure 9, each fastening element 48 includes a first head 50, a first cylindrical portion 51, a radial shoulder 52, a second cylindrical portion 53 and a second head 54. The radial shoulder 52 presents two opposing, mutually parallel radial faces 55 and 56. The first head 50 of each fastening element 48 engages the enlarged hole portion 43, such that the outer surface of the head 50 is substantially flush with the outer surface 41. The first cylindrical portion 51 engages the fastening hole 42 and the hole 47 of the sprocket 20 and the second cylindrical portion 53 engages the hole 46 of the sprocket 19. The second head 54 engages an enlarged hole portion 57 such that the outer surface of the second head 54 is substantially flush with the outer surface 58 of the sprocket 19. After insertion of the cylindrical portions 51 and 53 of the fastening element 48 in the holes 42, 47 and 46, the heads 50, 54 of each fastening element 48 are deformed through riveting. The radial shoulder 52 constitutes a spacer element between the sprockets 19, 20. Part of the cylindrical surface of the radial shoulder 52 rests against the surface of the centring and support seat 45.

It will be understood that from the structural point of view, each fastening element 48 behaves like a beam resting on the hole 42 and the centring and support seat 45. The sprocket 20 is carried by a zone of the fastening elements 48 comprised between the supports 42 and 45. This allows a highly rigid connection to be achieved. Only the sprocket 19 is cantilever mounted on the fastening element 48. From the point of view of the connection rigidity, the solution according to the present invention is superior to those of the prior art in which the sprockets are fixed by opposite parts of the fastening portion of the sprocket support member, because in the solutions according to the prior art both sprockets are cantilever mounted.

With reference to Figure 1, the subgroups 28, 29 and 30 are preferably mounted in mutually adjacent positions without the interposition of any spacer. The outer surface of the fastening portion of subgroup 28 rests against the outer surface of sprocket 17, belonging to subgroup 29, and the outer surface of the fastening portion of subgroup 29 rests against the outer surface of sprocket 19, belonging to subgroup 30. It can thus be understood how the fastening portions 37 of the intermediate subgroups 28 and 29 also perform the function of spacer members between adjacent subgroups. It is important to note that the fastening portions 37 perform the function of spacer members in a radially external zone, very close to the sprockets teeth. This permits the precision of the spacer distance between the sprockets to be significantly improved. As it has already been said in the foregoing, to perform the function of spacer members, the fastening portions 37 have a thickness equal to the thickness of the radial shoulders 52 of the fastening elements 48 that perform the function of spacer elements between the two sprockets of the same subgroup.

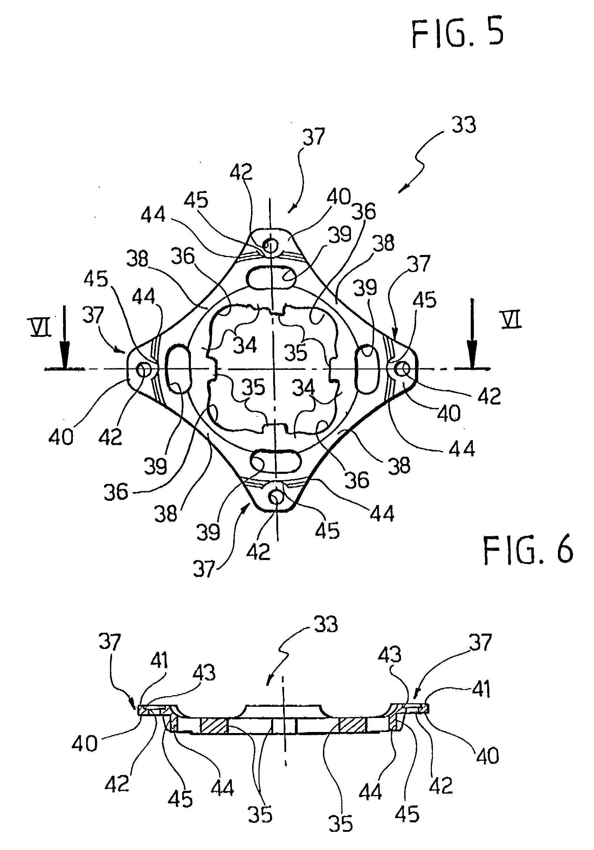

Of course, the present invention could be object of numerous variants without departing from the scope of the invention as defined in the following claims. In particular, the shape of each sprocket support member 31, 32, 33 could differ significantly with respect to that illustrated. For example, as illustrated in Figures 5 and 6, the fastening portions 37 could be shaped like arms that extend outwards in a radial direction, with the zone of reduced radial dimension 38 presenting concave external borders instead of convex ones, as shown in Figures 3 and 4. The profile of these arms could also be straight or present a more pronounced concavity or convexity with respect to those illustrated. In addition, the weight-saving hollow zones 36 and 39 could have shapes and dimensions very different from those shown in Figures 2 to 6.

Each fastening element 48 could be constituted by a smooth cylindrical pin with ends to be riveted in order to form the heads 58, and the radial shoulder 52 could be substituted by a ring inserted on the pin between the two sprockets 19, 20. The contact surfaces 55, 56 of the radial shoulder 52 could be divergent or convergent with respect to the axis of the fastening element 48. In addition, each sprocket support member 31, 32, 33 could carry more than two sprockets.

Finally, the sprocket support member object of the present invention could also be used for the front gears of a bicycle.

## Claims

1. A sprocket support member (31, 32, 33) for a bicycle sprocket (15, 16, 17, 18, 19, 20) assembly (10) comprising at least an engagement portion (34) provider with means (35) for coupling with a bicycle freewheel and at least one fastening portion (37) arranged in a radially external position with respect to said engagement portion (34), the fastening portion (37) presenting at least one hole (42) for the mounting of at least one sprocket (15, 16, 17, 18, 19, 20) to the sprocket support member (31, 32, 33), **characterized in that** said fastening portion (37) is axially displaced with respect to said engagement portion (34).

2. A sprocket support member according to claim 1, **characterized in that** the fastening portion (37) presents an axial thickness substantially equal to the desired axial distance between the sprockets of the sprocket assembly.

3. A sprocket support member according to claim 1, **characterized in that** it includes an axial projection (44) located between the engagement portion (34) and the fastening portion (37).

4. A sprocket support member according to claim 3, **characterized in that** said axial projection (44) forms a support against which a radially projecting portion (52) of a fastening element (48) is destined to rest.

5. A sprocket support member according to claim 4, **characterized in that** said axial projection (44) has a centring and support seat (45) presenting the shape of a cylindrical sector coaxial with said fastening hole (42) of the fastening portion (37).

6. A sprocket support member according to claim 4, **characterized in that** said axial projection (44) is located at the base of a radial contact surface (40) of said fastening portion (37).

7. A sprocket support member according to claim 1, **characterized in that** said fastening portion (37) and said engagement portion (34) form a single structural unit (34, 37), said engagement portion (34) being aligned with said fastening portion (37) in a radial direction.

8. A sprocket support member according to claim 7, **characterized in that** said structural unit (34, 37) includes at least one weight-saving cavity (39) located between the engagement portion (34) and the fastening portion (37).

9. A sprocket support member according to claim 7, **characterized in that** it includes a plurality of structural units (34, 37) angularly equidistant from each other and connected together by zones (38) having reduced dimensions in the radial direction.

10. A sprocket support member according to any of the previous claims, **characterized in that** it is made of a material chosen among the group including: steel, aluminium and its alloys, titanium, and fabric made of structural fibres incorporated in a matrix of plastic material, in which said fibres are chosen among carbon fibres, glass fibres, aramid fibres, boron fibres, ceramic fibres or any combination thereof.

11. A sprocket assembly for a bicycle, comprising at least one subgroup (28, 29, 30) including a sprocket support member (31, 32, 33) according to one of claims 1 to 10 and at least two sprockets (15 and 16, 17 and 18, 19 and 20) fixed to said fastening portion (37), **characterized in that** at least two of said sprockets (15 and 16, 17 and 18, 19 and 20) are fixed on the same side of said fastening portion (37).

12. A sprocket assembly according to claim 11, **characterized in that** it includes a plurality of fastening elements (48) for mounting at least a first and a second sprocket (19, 20) against a contact surface (40) of said sprocket support member (31, 32, 33) .

13. A sprocket assembly according to claim 12, **characterized in that** it includes spacer means (52) located between said first and second sprockets (19 and 20) .

14. A sprocket assembly according to claim 13, **characterized in that** said spacer means (52) include two mutually opposite contact surfaces (55, 56) against which respective contact portions of said first and second sprockets (19, 20) rest.

15. A sprocket assembly according to claim 14, **characterized in that** the contact surfaces (55, 56) of said spacer means (52) are parallel to the contact surface (40) of said fastening portion (37).

16. A sprocket assembly according to any of the claims 12 to 15, **characterized in that** said fastening elements (48) carry said spacer means (52).

17. A sprocket assembly according to claim 16, **characterized in that** said spacer means (52) are integrated with said fastening elements (48).

18. A sprocket assembly according to claim 17, **characterized in that** each of said fastening elements (48) includes an integral shoulder (52) with two opposing contact surfaces (55, 56).

19. A sprocket assembly according to claim 11, **characterized in that** each of said fastening elements (48) has a first cylindrical portion (51) that engages two aligned coaxial holes (42, 47) of the fastening portion (37) and the first sprocket (20).

20. A sprocket assembly according to claim 19, **characterized in that** each of said fastening elements (48) presents a second cylindrical surface (53) that engages a hole (46) of the second sprocket (19).

21. A sprocket assembly according to claim 20, **characterized in that** each of said fastening elements (48) includes a radial shoulder (52) between the first and the second cylindrical portion (51, 53).

22. A sprocket assembly according to claim 11, **characterized in that** each of said fastening elements (48) presents a first head (50) with an outer surface substantially flush with an outer surface (41) of said fastening portion (37).

23. A sprocket assembly according to claim 22, **characterized in that** each of said fastening elements (48) presents a second head (54) with an outer surface substantially flush with an outer surface (58) of said second sprocket (19) .

24. A sprocket assembly according to claim 11, **characterized in that** each of said fastening elements (48) presents a radially projecting portion (52) arranged to make contact with an axial projection (44) located in a radially internal position with respect to said fastening portion (41).

25. A sprocket assembly for a bicycle, including a plurality of subgroups (28, 29, 30) each of which includes:
- a sprocket support member (31, 32, 33) presenting at least one engagement portion (34) provided with means (35) for coupling it to a bicycle freewheel and at least one fastening portion (37) arranged in a radially external position with respect to said engagement portion (34), and
- at least two sprockets (15 and 16, 17 and 18, 19 and 20) fixed to said fastening portion (37),
**characterized in that** said subgroups are axially mounted in contact with each other.

26. A sprocket assembly according to claim 25, **characterized in that** the fastening portion (37) of at least one of said subgroups presents an axial thickness substantially equal to the desired distance between two adjacent sprockets belonging to two different, mutually adjacent subgroups.

27. A sprocket assembly according to claim 26, **characterized in that** the fastening portion (37) of at least one of said subgroups (28, 29, 30) presents an outer radial surface (41) that rests against an outer radial surface (58) of a sprocket of an adjacent subgroup.
